# EUROPÄISCHE PATENTSCHRIFT

(11) **EP 3 525 973 B1**
(45) Veröffentlichungstag und Bekanntmachung des Hinweises auf die Patenterteilung: **11.03.2026**
(21) Anmeldenummer: 17781471.2
(22) Anmeldetag: 10.10.2017
(51) Int. Cl.: B23K 10/00, B23K 26/03, B23K 26/38

(54) **VORRICHTUNG UND VERFAHREN ZUR ÜBERWACHUNG EINES THERMISCHEN SCHNEIDPROZESSES**
DEVICE AND METHOD FOR MONITORING A THERMAL CUTTING PROCESS
DISPOSITIF ET PROCÉDÉ DE SURVEILLANCE D'UN PROCESSUS DE DÉCOUPE THERMIQUE

(30) Priorität: 13.10.2016 DE 102016219927
(43) Veröffentlichungstag der Anmeldung: 21.08.2019
(73) Patentinhaber: TRUMPF Werkzeugmaschinen SE + Co. KG, 71254 Ditzingen (DE)
(72) Erfinder: MAGG, Winfried, 71254 Ditzingen (DE); SCHINDHELM, David, 70499 Stuttgart (DE); REGAARD, Boris, 70499 Stuttgart (DE); BOCKSROCKER, Oliver, 74343 Sachsenheim (DE); ROMINGER, Volker, 71711 Steinheim an der Murr (DE)
(74) Vertreter: Trumpf Patentabteilung
(86) Internationale Anmeldenummer: PCT/EP2017/075768
(87) Internationale Veröffentlichungsnummer: WO 2018/069291

(56) Entgegenhaltungen:
- WO-A1-2012/037955
- WO-A1-2012/107331
- WO-A1-2015/036140

## Beschreibung

Die vorliegende Erfindung betrifft eine Vorrichtung zur Überwachung, insbesondere zur Regelung, eines thermischen Schneidprozesses an einem typischerweise plattenartigen Werkstück, und ein Verfahren zum Überwachen, insbesondere zum Regeln, eines Schneidprozesses an einem Werkstück, siehe Ansprüche 1 und 11.

In der WO 2015/036140 A1 wird eine Vorrichtung zur Überwachung, insbesondere zur Regelung, eines Schneidprozesses beschrieben, die eine Bilderfassungseinrichtung zur Erfassung eines zu überwachenden Bereichs an dem Werkstück aufweist, wobei der zu überwachende Bereich einen Wechselwirkungsbereich eines Laserstrahls mit dem Werkstück umfasst, sowie eine Auswerteeinrichtung, die ausgebildet ist, mindestens eine charakteristische Kenngröße einer bei dem Schneidprozess gebildeten Schnittfuge, beispielsweise einen Schneidfrontwinkel, zu ermitteln. Die in der WO 2015/036140 A1 beschriebene Bilderfassungseinrichtung ist zur Bildung eines Beobachtungsstrahls zur Beobachtung des Wechselwirkungsbereichs aus einer unter einem Winkel zur Strahlachse des Laserstrahls verlaufenden Beobachtungsrichtung ausgebildet und umfasst eine Abbildungsoptik zur Erzeugung eines Bildes des Wechselwirkungsbereichs aus der unter dem Winkel zur Strahlachse des Laserstrahls verlaufenden Beobachtungsrichtung. Verläuft die Beobachtungsrichtung nicht in oder entgegen einer Vorschubrichtung des Schneidprozesses, kann die Auswerteeinrichtung anhand des aufgenommenen Bildes eine Gratbildung, Rauigkeit und/oder Riefenbildung als charakteristische Kenngröße(n) der Schnittfuge ermitteln.

In der WO 2012/107331 A1 (offenbarend den Oberbegriff der Ansprüche 1 und 11) wird eine Vorrichtung zur Überwachung und insbesondere zur Regelung eines Laserschneidprozesses beschrieben, die ausgebildet sein kann, anhand eines Bildes eines Wechselwirkungsbereichs zwischen einem Laserstrahl und einem Werkstück das Vorliegen oder Fehlen einer Gratbildung an einem Schnittspalt zu ermitteln. Beispielsweise kann bei einem Schmelzschneidprozess beim Auftreten von drei von der Schneidfront ausgehenden Leuchtstreifen auf das Vorliegen einer Gratbildung (Krümelgrat) geschlossen werden.

In der DE 10 2014 000 330 B3 werden ein Verfahren und eine Vorrichtung zur Überwachung und ggf. Regelung der Fokuslage eines Bearbeitungslaserstrahls beim Laserschneiden eines Werkstücks beschrieben, bei denen mit mindestens einer bildgebenden Kamera eine durch die Laserbearbeitung hervorgerufene optische Prozessemission sowie eine im Werkstück voranschreitende Schneidfront in einem oder in mehreren Bildern ortsaufgelöst erfasst werden. Die momentane Fokuslage des Bearbeitungslaserstrahls relativ zur Oberfläche des Werkstücks wird dann jeweils aus einer momentanen Ausdehnung der Prozessemission und einem momentanen Abstand eines Ortes maximaler Prozessemission zum obersten Schneidfrontscheitelpunkt in dem einen oder den mehreren Bildern ermittelt.

Aus der WO 2012/037955 A1 sind ein Verfahren und eine Vorrichtung zur Überwachung oder Überprüfung einer (Laser-)Bearbeitung eines Werkstücks bekannt geworden, bei denen eine erste Strahlungskomponente von Wärmestrahlung mit einer ersten Polarisation und eine zweite Strahlungskomponente von Wärmestrahlung mit einer zweiten, von der ersten verschiedenen Polarisation erfasst werden, die von zumindest einem Flächenelement in einem Bearbeitungsbereich des Werkstücks emittiert werden. Aus der erfassten ersten und zweiten Strahlungskomponente werden Datenwerte einer Oberflächenstruktur des Werkstücks an dem zumindest einen Flächenelement ermittelt. Bei einer Variante der Laserbearbeitung erfolgt eine Relativbewegung zwischen dem Werkstück und einem Laserstrahl in einer ersten Bewegungsrichtung, wobei die erste Polarisation parallel und die zweite Polarisation senkrecht zur ersten Bewegungsrichtung liegt.

In dem Artikel "Numerical investigations on high-power laser cutting of metals", E. H. Amara et al., Appl. Phys. A (2015) 119:1245-1260, wird ein auf einer numerischen Simulation basierender theoretischer Ansatz für das Studium des Metallschneidens mittels eines Lasers beschrieben, der auf einem dreidimensionalen Modell der Schneidfront sowie der Schnittfuge basiert. Die auf der numerischen Simulation basierenden Resultate werden für sechs unterschiedliche Vorschubgeschwindigkeiten mit experimentellen Beobachtungen verglichen.

### Aufgabe der Erfindung

Der Erfindung liegt die Aufgabe zugrunde, eine Vorrichtung und ein Verfahren bereitzustellen, die eine zuverlässige Ermittlung mindestens einer Messgröße für die Schneidqualität des Schneidprozesses und insbesondere eine Regelung des Schneidprozesses anhand der Messgröße ermöglichen.

### Gegenstand der Erfindung

Eine Vorrichtung zur Überwachung, insbesondere zur Regelung, eines thermischen Schneidprozesses an einem Werkstück entsprechend eines ersten Aspektes der Erfindung ist im Anspruch 1 definiert.

Bei dem Bild des zu überwachenden Bereichs des Werkstücks, welches typischerweise von der Oberseite des Werkstücks aufgenommen wird, handelt es sich in der Regel um ein Wärmebild. Für die Erzeugung des Bildes weist die Bilderfassungseinrichtung einen Detektor, typischerweise in Form eines Bildsensors in Form einer Kamera, beispielsweise einer CMOS- oder ggf. einer CCD-Kamera auf. Der zu überwachende Bereich kann die Schneidfront der Schnittfuge enthalten, die bei der Wechselwirkung des Bearbeitungsstrahls mit dem Werkstück gebildet wird, es ist aber auch möglich, dass der zu überwachende Bereich lediglich die Schnittflanken hinter der Schneidfront umfasst. Der zu überwachende Bereich sollte aber nicht zu weit von der Schneidfront der Schnittfuge bzw. vom Wechselwirkungsbereich zwischen dem Bearbeitungsstrahl und dem Werkstück entfernt sein, insbesondere wenn eine Regelung des Schneidprozesses anhand der mindestens einen Messgröße erfolgen soll.

Die Erfinder haben erkannt, dass ein physikalischer Zusammenhang zwischen der geometrischen Gestalt des Verlaufs der Spaltbreite des Schnittfuge in Dickenrichtung des Werkstücks von der Oberseite des typischerweise plattenartigen Werkstücks zur Unterseite des Werkstücks und der Schneidqualität besteht: Für den Fall, dass sich die pro zurückgelegter Strecke entlang der Vorschubrichtung in das Werkstück eingebrachte Energie (Streckenenergie) verringert oder sich andere Parameter des Schneidprozesses ungünstig verändern, verringert sich die Breite des Schnittspalts von der Oberseite des Werkstücks in Richtung auf die Unterseite des Werkstücks, bis im Extremfall die Schnittfuge nahe der Unterseite des Werkstücks vollständig geschlossen wird und es zu einem vollständigen Schnittabriss kommt.

Die Abnahme der Spaltbreite der Schnittfuge von der Oberseite zur Unterseite des Werkstücks (d.h. die Ausbildung einer im Querschnitt V-förmigen Schnittfuge) kann bereits deutlich vor dem Schnittabriss die Schnittqualität (Rauheit, Riefenbild, Gratbildung und Formtreue) stark beeinflussen. Durch eine Regelung des thermischen Schneidprozesses zur Erzeugung einer Schnittfuge mit in Dickenrichtung im Wesentlichen konstanter Breite können Unregelmäßigkeiten beim Schneidprozess verhindert und auf diese Weise ein Qualitätsschnitt garantiert werden. Zu diesem Zweck wird vorgeschlagen, mindestens eine Messgröße zu bestimmen, die eine Aussage über den Verlauf der Schnittfuge in Dickenrichtung, insbesondere über eine Verringerung der Spaltbreite der Schnittfuge in Dickenrichtung, ermöglicht. Eine solche Messgröße stellt der Winkel dar, den die beiden Schnittflanken der Schnittfuge miteinander einschließen und der umso größer wird, je stärker die Spaltbreite der Schnittfuge in Dickenrichtung des Werkstücks zur Unterseite des Werkstücks abnimmt. Der Winkel zwischen den beiden Schnittflanken, welcher ein Maß für die V-Form der Schnittfuge darstellt, wird bei z.B. konkav oder konvex gekrümmten Schnittflanken definiert durch den Winkel zwischen der jeweiligen Schnittflanke an der Oberseite des Werkstücks und an der Unterseite des Werkstücks. Bei der Messgröße, welche den Verlauf der Schnittfuge in Dickenrichtung beschreibt, kann es sich um den Winkel zwischen den beiden Schnittflanken handeln, es ist aber auch möglich, den Verlauf der Spaltbreite der Schnittfuge indirekt durch eine andere Messgröße zu bestimmen, wie weiter unten näher beschrieben wird.

Erfindungsgemäß weist die Bilderfassungseinrichtung einen Polarisator auf, der eine erste lineare Polarisationskomponente eines Beobachtungsstrahls zur Beobachtung des zu überwachenden Bereichs zu einem Detektor transmittiert und der eine zweite, zur ersten senkrechte Polarisationskomponente des Beobachtungsstrahls filtert, wobei die Auswerteeinrichtung ausgebildet ist, die Messgröße anhand von zwei entlang der Schnittflanken der Schnittfuge verlaufenden Leuchtstreifen in dem mindestens einen Bild zu ermitteln, und wobei als Messgröße bevorzugt ein Abstand und/oder ein Winkel zwischen den beiden Leuchtstreifen ermittelt wird.

Die Erfinder haben erkannt, dass es für die Beobachtung der Leuchtstreifen, anhand derer der Verlauf der Spaltbreite in Dickenrichtung der Schnittfuge bestimmt werden kann, typischerweise erforderlich ist, eine einzige lineare Polarisationskomponente des Beobachtungsstrahls zur Beobachtung des zu überwachenden Bereichs zu verwenden. Die Erfinder haben zudem erkannt, dass die beiden Leuchtstreifen, die in dem auf diese Weise erzeugten Bild zu erkennen sind und die entlang der Schneidfront sowie entlang der Schnittkanten der Schnittfuge verlaufen, einem Teil der Prozessemissionen entsprechen, bei dem die Schnittfront bzw. die Schnittkanten innerhalb eines Winkelbereichs zur Beobachtungsrichtung ausgerichtet sind, in dem die polarisationsabhängigen Emissionen besonders stark sind. Im Bereich, in dem die beiden Leuchtstreifen zu erkennen sind, liegt der Schnittfrontwinkel bzw. der Winkel zwischen den beiden Schnittkanten der Schnittfuge in einem besonders stark emittierenden Winkelbereich. Bei einer Annäherung an die Trenngrenze, bei der das Werkstück bei dem thermischen Schneidprozess über seine gesamte Dicke gerade noch vollständig durchtrennt wird, aber auch bei einer Annäherung an die Qualitätsschnittgrenze, bei der gerade noch ein Gutschnitt vorliegt, aber die Breite der Schnittfuge in Dickenrichtung bereits abnimmt, verringert sich auch der Abstand zwischen den Leuchtstreifen. Auch der Winkel zwischen den beiden Leuchtstreifen in dem Bild kann als Messgröße für die Schneidqualität verwendet werden, da sich der Winkel zwischen den Leuchtstreifen, die bei einem Qualitätsschnitt typischerweise parallel verlaufen, bei einem Schnitt mit schlechter Schnittqualität bzw. kurz vor einem Schnittabriss, bei dem sich beide Leuchtstreifen vereinigen, verändert.

Verringert sich der Winkel bzw. der Abstand zwischen den Schnittflanken, deutet dies auf eine Verschlechterung der Schmelzaustriebs im unteren Bereich der Schnittflanken hin, was zu einer größeren Rauigkeit an den Schnittflanken führt. Daher stellt der Abstand zwischen den Leuchtstreifen bzw. der Winkel zwischen den Leuchtstreifen eine (analoge) Messgröße für den Prozesszustand, genauer gesagt die Schnittqualität (Qualitätsschnitt, Trennschnitt, Vorschubreserve, ...) bei einem thermischen Schneidprozess, insbesondere bei einem Schmelzschneidprozess, dar, wobei diese Messgröße insbesondere im Wesentlichen proportional zum Abstand des Schneidprozesses von der Trenn- bzw. Qualitätsschnittgrenze ist. Aus diesem Grund kann/können der Abstand zwischen den Leuchtstreifen und/oder der Winkel zwischen den Leuchtstreifen als Eingangsgröße(n) zur Regelung von Parametern des Schneidprozesses (Streckenenergie, Fokuslage, etc.) verwendet werden. Wie weiter oben beschrieben wurde, ist es nicht zwingend erforderlich, die Leuchtstreifen zur Bestimmung einer Messgröße für den Verlauf der Spaltbreite der Schnittfuge zu verwenden. Beispielsweise kann der Winkel zwischen den beiden Schnittflanken (s.o.) als (kontinuierliche) Messgröße für die Schnittqualität des Schneidprozesses dienen. Es versteht sich, dass anhand der Messgröße(n) lediglich eine Zustandskontrolle bzw. eine Qualitätskontrolle des Schneidprozesses erfolgen kann, ohne dass eine Regelung des Schneidprozesses erfolgt.

Es ist möglich, dass bei einigen Prozesskonfigurationen des Schneidprozesses eine durchgehende Schmelze um die gesamte Schnittfront herum verläuft. Es kann auch vorkommen, dass Schmelzfäden je entlang einer Schnittflanke sowie mittig an der Schnittfront ablaufen. Derartige Prozesszustände beeinflussen jedoch nicht das hier beschriebene grundlegende Messprinzip, d.h. es werden bei der Beobachtung mit einer linearen Polarisationskomponente (s-Polarisation) stets nur zwei Leuchtstreifen detektiert. Vielmehr lassen sich anhand einer Beobachtung der Leuchtstreifen Rückschlüsse auf den Verlauf der Spaltbreite der Schnittfuge ziehen, insbesondere auf den Winkel zwischen den Schnittflanken in Dickenrichtung des Werkstücks, so dass ein "Qualitätsschnitt" mit geringer Rauigkeit der Schnittflanken von einem "Trennschnitt" mit größerer Rauigkeit (und beliebige Zwischenstufen hiervon) unterschieden werden kann. Wie weiter oben beschrieben wurde, deutet eine Verringerung der Breite der Schnittfuge von der Oberseite zur Unterseite des Werkstücks auf einen bevorstehenden Fehlschnitt hin. Somit kann anhand der Messgröße auch eine "Robustheit" des Prozesses (d.h. z.B. eine Vorschubreserve oder eine Leistungsreserve der (Laser-)Strahlquelle) bestimmt werden.

Bei einer Weiterbildung ist die Auswerteeinrichtung ausgebildet, den Abstand zwischen den Leuchtstreifen anhand der Positionen von zwei Intensitätsmaxima des Bildes quer zu einer Vorschubrichtung des thermischen Schneidprozesses zu bestimmen. Das Intensitätsprofil bzw. die Intensitätsverteilung der detektierten Beobachtungsstrahlung wird hierbei typischerweise in einem Bildausschnitt des Bildes quer zur Vorschubrichtung erfasst bzw. ausgewertet, der beispielsweise entlang einer Bildzeile bzw. Pixelzeile des Bildes bzw. der Kamera verlaufen kann. Insbesondere für den Fall, dass die Beobachtungsrichtung mit der Vorschubrichtung mitbewegt wird, kann die Bildzeile bzw. die Pixelzeile, die ausgewertet wird, in dem Bild bzw. auf dem Chip der Kamera fest definiert sein, die Position des ausgewerteten Bildbereichs kann aber auch relativ zum Bearbeitungsstrahl bzw. zur Vorschubrichtung verändert werden. An Stelle der Auswertung einer einzigen Bildzeile bzw. Pixelzeile können ggf. auch mehrere Bildzeilen für die Auswertung bzw. für die Bestimmung des Intensitätsprofils herangezogen werden, über die in geeigneter Weise gemittelt wird, beispielsweise indem der arithmetische Mittelwert oder der Median der Intensitätswerte der einzelnen Bildzeilen verwendet wird. In dem ggf. gemittelten Intensitätsprofil wird der Abstand der beiden Intensitätsmaxima ermittelt und kann wie weiter oben beschrieben als Messgröße für die Schneidqualität des Schneidprozesses dienen. Für die Berechnung der Positionen der Intensitätsmaxima aus dem Intensitätsprofil können Verfahren aus der Bildverarbeitung verwendet werden.

In einer alternativen oder zusätzlichen Bildauswertung wird der Winkel zwischen den beiden Leuchtstreifen in Draufsicht auf das Werkstück oder der Winkel zwischen den beiden Schnittflanken (in Querschnittsrichtung) ermittelt und der Winkel bzw. die Winkeldifferenz wird als Messgröße herangezogen. Für die Winkelmessung können ebenfalls Bild-Auswertealgorithmen verwendet werden, die in der Literatur beschrieben sind, z.B. die Hough-Transformation.

Wie weiter oben beschrieben wurde, kann der Winkel zwischen den Schnittflanken bzw. die Verringerung der Breite der Schnittfuge in negativer Z-Richtung bzw. in Dickenrichtung des Werkstücks als Messgröße verwendet werden. Der Winkel zwischen den Schnittflanken kann direkt oder ggf. anhand der Bestimmung der Spaltbreite der Schnittfuge an der Oberseite des Werkstücks sowie der Spaltbreite an der Unterseite des Werkstücks ermittelt werden (sofern die Dicke des Werkstücks bekannt ist). Zur Bestimmung der Geometrie des Schnittspalts in Dickenrichtung kann beispielsweise die optische Kohärenztomographie (OCT) bzw. ein OCT-Sensor verwendet werden, d.h. ein interferometrisches Verfahren, bei dem durch eine oszillierende Bewegung von der Oberseite des Werkstücks das Tiefenprofil der Schnittfuge hinter dem Bearbeitungsstrahl gemessen wird und dabei beispielsweise der Winkel zwischen den Schnittflanken der Schnittfuge, die Spaltbreite des Schnittspalts an der Unterseite des Werkstücks sowie die Spaltbreite des Schnittspalts an der Oberseite des Werkstücks gemessen werden. Auch eine strukturierte Beleuchtung des Werkstücks oder ein Quotientengoniometer können zu diesem Zweck verwendet werden. Gegebenenfalls kann bereits anhand der Bestimmung der Spaltbreite an der Unterseite des Werkstücks auf eine schlechte Schnittqualität geschlossen werden, wenn die Spaltbreite an der Unterseite des Werkstücks (deutlich) kleiner als der Fokusdurchmesser ist.

In einer weiteren Bildauswertung werden Bilder von Qualitäts- und Trennschnitten geclustert und das aktuelle Bild des zu überwachenden Bereichs des Schneidprozesses wird über vergleichende Bildauswertung diesen Clustern zugeordnet. Auch hierfür können bekannte Bildauswertealgorithmen verwendet werden, z.B. der Haar-Algorithmus. In diesem Fall kann ebenfalls anhand der Leuchtstreifen in den geclusterten Bildern von Trenn- bzw. von Qualitätsschnitten eine Messgröße für die Schneidqualität ermittelt werden, die ggf. zur Regelung verwendet werden kann, sofern es sich um eine (annähernd) kontinuierliche Messgröße handelt.

Bei allen Bildauswertealgorithmen kann es notwendig oder vorteilhaft sein, die aufgenommenen Bilder zuvor bezüglich der aktuellen Vorschubrichtung zu drehen und ggf. über Schwarz- und Weißbildabgleich, Entzerrung und weitere in der Bildverarbeitung bekannte Mechanismen zu verbessern. Zusätzlich kann es vorteilhaft sein, mehrere zeitlich aufeinanderfolgende Bilder pixelweise mittels Median, Mittelwert oder vergleichbaren Filtern zu mitteln. Weiterhin ist es vorteilhaft, Bilder mit Prozessstörungen (plötzliche größere Bildhelligkeiten aufgrund spontaner Verdampfung oder Plasmabildung) bei der Auswertung der Bilder zu ignorieren. Derartige Prozessstörungen können jedoch als weiterer Indikator für eine geringe Vorschubreserve bzw. als Hinweis auf einen geringen Abstand des Prozesses von einem Schnittabbruch dienen.

Erfindungsgemäß ist die Bilderfassungseinrichtung zur Bildung eines Beobachtungsstrahls zur Beobachtung des zu überwachenden Bereichs aus einer unter einem Winkel zur Strahlachse des Bearbeitungsstrahls verlaufenden Beobachtungsrichtung ausgebildet, wobei der Beobachtungsstrahl bevorzugt die Fokussiereinrichtung durchläuft, und wobei die Bilderfassungseinrichtung eine Abbildungsoptik zur Erzeugung des Bildes des zu überwachenden Bereichs aus der unter dem Winkel zur Strahlachse des Bearbeitungsstrahls verlaufenden Beobachtungsrichtung umfasst. Um eine solche nicht-koaxiale Beobachtung zu ermöglichen, kann die Vorrichtung bzw. die Bilderfassungseinrichtung beispielsweise wie in der eingangs zitierten WO 2015/036140 A1 beschrieben ist ausgebildet sein, welche durch Bezugnahme in ihrer Gesamtheit zum Inhalt dieser Anmeldung gemacht wird. Eine nicht koaxiale Beobachtung der Leuchtstreifen hat sich als vorteilhaft erwiesen, diese ist aber nicht zwingend erforderlich, d.h. grundsätzlich ist auch eine Beobachtung des zu überwachenden Bereichs koaxial bzw. parallel zur Strahlachse des Bearbeitungsstrahls möglich.

Bei einer Weiterbildung liegt der Winkel der Beobachtungsrichtung zur Strahlachse des Bearbeitungsstrahls zwischen 1° und 5° bevorzugt zwischen ca. 1,5° und 4,5°. Eine Beobachtung unter vergleichsweise kleinen Winkeln zur Strahlachse des Bearbeitungsstrahls hat sich für die vorliegende Anwendung als vorteilhaft herausgestellt.

Bei einer weiteren Weiterbildung ist die Bilderfassungseinrichtung ausgebildet, die Ausrichtung der Beobachtungsrichtung des Beobachtungsstrahls und/oder die Richtung der ersten, transmittierten linearen Polarisationskomponente des Beobachtungsstrahls in einer Ebene senkrecht zur Strahlachse des Bearbeitungsstrahls in Abhängigkeit von einer Vorschubrichtung des thermischen Schneidprozesses zu verändern, insbesondere relativ zur Vorschubrichtung konstant zu halten. Wie in der eingangs zitierten WO 2015/036140 A1 beschrieben ist, kann es günstig sein, wenn der Winkel zwischen der Vorschubrichtung und der Beobachtungsrichtung in der Ebene senkrecht zur Strahlachse einen konstanten Wert aufweist, auch wenn sich die Vorschubrichtung, d.h. die Richtung der Relativbewegung zwischen dem Bearbeitungsstrahl und dem Werkstück, verändert. Beispielsweise kann es für die bildgebende Erfassung günstig sein, wenn die Beobachtungsrichtung in der Projektion in der Werkstückebene entgegen der Vorschubrichtung verläuft, was auch als schleppende Beobachtung bezeichnet wird, oder ggf. in Vorschubrichtung, was auch als stechende Beobachtung bezeichnet wird.

Auch hat es sich in vielen Anwendungsfällen als günstig erwiesen, die Ausrichtung der Polarisationskomponente, die durch den Polarisationsfilter ausgefiltert wird, relativ zur Vorschubrichtung konstant zu halten. Insbesondere kann die gefilterte Polarisationskomponente parallel zur Vorschubrichtung oder senkrecht zur Vorschubrichtung ausgerichtet sein, um die Beobachtung zu verbessern bzw. zu vereinfachen. Um die Richtung der linearen Polarisationskomponente gemeinsam mit der Vorschubrichtung zu verändern bzw. diese zu drehen, kann beispielsweise ein motorisch angetriebener (typischerweise drehbarer) Polarisationsfilter oder ein elektrisch drehbarer Polarisationsfilter (LCD-Polarisator) verwendet werden. Wird für die Veränderung der Ausrichtung der Beobachtungsrichtung des Beobachtungsstrahls eine drehbare Blende verwendet, die typischerweise mindestens eine exzentrische Blendenöffnung aufweist, so kann der Polarisationsfilter auf die drehbare Blende montiert und gemeinsam mit dieser gedreht werden, ohne dass für die Drehung des Polarisationsfilters ein eigener Antrieb benötigt wird.

Bei einer weiteren Ausführungsform verläuft die Beobachtungsrichtung in einer Projektion in eine Ebene senkrecht zur Strahlachse des Bearbeitungsstrahls in Vorschubrichtung, d.h. die Vorschubrichtung und die Beobachtungsrichtung sind in dieser Ebene parallel und gleich ausgerichtet. Diese so genannte stechende Beobachtung hat sich insbesondere für die Detektion der Leuchtstreifen als vorteilhaft erwiesen.

Bei einer weiteren Weiterbildung verläuft die Richtung der ersten, transmittierten linearen Polarisationskomponente des Beobachtungsstrahls in einer Ebene senkrecht zur Strahlachse des Bearbeitungsstrahls (d.h. in der Werkstückebene) unter einem Winkel zwischen 55° und 125°, bevorzugt zwischen 80° und 100°, besonders bevorzugt unter einem Winkel von 90° zur Vorschubrichtung. Wie weiter oben beschrieben wurde, können die Leuchtstreifen typischerweise nur für den Fall beobachtet werden, dass der Beobachtungsstrahl eine lineare Polarisationskomponente aufweist. Diese lineare Polarisationskomponente verläuft idealer Weise senkrecht zur Vorschubrichtung (s-Polarisation).

Bei einer Weiterbildung ist bei die Bilderfassungseinrichtung zur Erzeugung des mindestens einen Bildes des zu überwachenden Bereichs des Werkstücks bei Wellenlängen zwischen 700 nm und 2 µm ausgebildet. Für Eisen-basierte Werkstückmaterialien haben sich Beobachtungs-Wellenlängen zur Beobachtung des zu überwachenden Bereichs zwischen 700 nm und 1000 nm, bevorzugt zwischen 800 nm und 940 nm, als vorteilhaft erwiesen. Diese Wellenlängen können mit SiObasierten Bildsensoren bzw. Detektoren erfasst werden. Eine Beobachtung bei größeren Wellenlängen (z.B. bis 1,6 µm) ist ebenfalls möglich, erfordert jedoch InGaAs-basierte Bildsensoren bzw. Detektoren, die erheblich aufwändiger sind und in der Regel eine geringere Bildrate aufweisen. Ein Vorteil der Beobachtung bei größeren Wellenlängen besteht darin, dass auch bei Werkstücken aus Materialien mit geringerer Schmelztemperatur (z.B. Al, Cu) die Leuchtstreifen beobachtet werden können. Kürzere Wellenlängen von weniger als 700 nm liefern in der Regel keine ausreichend intensive Temperaturstrahlung mehr, um eine zuverlässige Auswertung sicherzustellen.

Für die Auswertung der typischerweise von einer Kamera aufgenommenen bzw. erzeugten Bilder, genauer gesagt der Bilddaten, weist die Auswerteeinrichtung eine übliche Bildverarbeitungseinrichtung auf, die z.B. in Form einer Recheneinheit bzw. eines Mikroprozessors ausgebildet sein kann. Die Auswerteeinrichtung steht zudem in der Regel über eine Schnittstelle zum Datenaustausch mit einer Steuerungseinrichtung bzw. einer Regelungseinrichtung für die Steuerung bzw. die Regelung des Bearbeitungsprozesses in Verbindung.

Bei einer weiteren Ausführungsform umfasst die Vorrichtung zusätzlich eine Steuer- und/oder Regeleinrichtung zur Beeinflussung mindestens einer Stellgröße des thermischen Schneidprozesses in Abhängigkeit von der mindestens einen ermittelten Messgröße für den Verlauf der Spaltbreite in Dickenrichtung des Werkstücks. In diesem Fall wird die beispielsweise anhand der Leuchtstreifen bestimmte Messgröße bzw. der Messwert verwendet, um durch die Beeinflussung, die Anpassung bzw. die Regelung von Stellgrößen des thermischen Schneidprozesses (beispielsweise Vorschubgeschwindigkeit, Laserleistung, Fokuslage, Gasdruck, etc.) eine gleichbleibende Schneidqualität (insbesondere Kantenrauigkeit) und somit einen sicheren Trennschnitt zu gewährleisten.

Weiterhin kann der ermittelte Messwert bzw. die Messgröße zur Überprüfung des Prozesszustandes aufgezeichnet und überwacht werden. Bei unzulässigen Abweichungen kann ein Bediener informiert werden und / oder es können prozessverbessernde Maßnahmen (Justage, Reinigung) automatisch oder manuell eingeleitet werden. Anhand der Messgröße kann auch auf eine anstehende Wartung der Vorrichtung zurückgeschlossen werden.

Die Vorrichtung kann weitere Bauelemente umfassen, beispielsweise eine Beleuchtungsquelle, die zur Beleuchtung des Werkstücks in dem zu überwachenden Bereich dient. Die Bilderfassungseinrichtung kann insbesondere zur Aufnahme bzw. zur Erzeugung eines Bildes durch eine Düsenöffnung einer Laserbearbeitungsdüse zum Durchtritt des Laserstrahls auf das Werkstück ausgebildet sein. Bei der Vorrichtung kann es sich beispielsweise um einen Laserschneidkopf oder um eine Laserschneidmaschine handeln.

Ein Verfahren zur Überwachung, insbesondere zur Regelung, eines thermischen Schneidprozesses an einem Werkstück entsprechend eines zweiten Aspektes der Erfindung ist im Anspruch 11 definiert.

Wie weiter oben beschrieben wurde, kann die auf diese Weise ermittelte Messgröße beispielsweise zur Überprüfung des Prozesszustandes aufgezeichnet und überwacht werden sowie bei unzulässigen Abweichungen ggf. ein Bediener informiert werden.

Wie weiter oben dargestellt wurde, kann der Winkel zwischen den Schnittflanken bzw. die Verringerung der Breite der Schnittfuge in negativer Z-Richtung bzw. in Dickenrichtung des Werkstücks als Messgröße verwendet werden, wobei der Winkel zwischen den Schnittflanken direkt oder beispielsweise durch die Bestimmung der Spaltbreite der Schnittfuge an der Oberseite des Werkstücks sowie der Spaltbreite an der Unterseite des Werkstücks ermittelt werden kann (sofern die Dicke des Werkstücks bekannt ist). Zur Bestimmung der Geometrie des Schnittspalts in Dickenrichtung kann wie weiter oben beschrieben die optische Kohärenztomographie (OCT), eine strukturierte Beleuchtung des Werkstücks oder ein Quotientengoniometer verwendet werden. Gegebenenfalls kann die Spaltbreite an der Unterseite des Werkstücks als Messgröße für die Schneidqualität ausreichend sein, beispielsweise wenn diese mit dem Fokusdurchmesser des Bearbeitungsstrahls verglichen wird. Für den Fall, dass die Spaltbreite an der Unterseite des Werkstücks geringer ist als der Fokusdurchmesser des Bearbeitungsstrahls, deutet dies auf eine schlechte Schnittqualität hin.

Bei einer Variante wird eine erste lineare Polarisationskomponente eines Beobachtungsstrahls zur Beobachtung des zu überwachenden Bereichs für das Erzeugen des mindestens einen Bildes zu einem Detektor transmittiert und eine zweite, zur ersten senkrechte Polarisationskomponente des Beobachtungsstrahls wird gefiltert, wobei die Messgröße anhand von zwei entlang der Schnittflanken der Schnittfuge verlaufenden Leuchtstreifen in dem mindestens einen Bild ermittelt wird, wobei die Messgröße bevorzugt einen Abstand oder einen Winkel zwischen den beiden Leuchtstreifen bildet. Wie weiter oben beschrieben wurde, kann anhand der Leuchtstreifen auf den Verlauf der Spaltbreite der Schnittfuge in Dickenrichtung des Werkstücks geschlossen werden.

Bei einer weiteren Variante wird die Ausrichtung einer Beobachtungsrichtung eines Beobachtungsstrahls zur Beobachtung des zu überwachenden Bereichs und/oder die Richtung der ersten, transmittierten linearen Polarisationskomponente des Beobachtungsstrahls in einer Ebene senkrecht zur Strahlachse des Bearbeitungsstrahls in Abhängigkeit von einer Vorschubrichtung des thermischen Schneidprozesses verändert, insbesondere relativ zur Vorschubrichtung konstant gehalten.

Bei einer Variante wird die Beobachtungsrichtung in einer Projektion in eine Ebene senkrecht zur Strahlachse des Bearbeitungsstrahls in Vorschubrichtung ausgerichtet, d.h. es erfolgt eine stechende Beobachtung, was sich insbesondere für die Beobachtung der Leuchtstreifen als vorteilhaft herausgestellt hat.

Vorzugsweise verläuft die Richtung der ersten, transmittierten linearen Polarisationskomponente des Beobachtungsstrahls in einer Ebene senkrecht zur Strahlachse des Bearbeitungsstrahls unter einem Winkel zwischen 55° und 125°, bevorzugt zwischen 80° und 100°, besonders bevorzugt unter einem Winkel von 90° zur Vorschubrichtung. Bei der gefilterten linearen Polarisationskomponente handelt es sich in diesem Fall um eine Polarisationskomponente, die senkrecht zu einer die Vorschubrichtung sowie die Strahlachse des Bearbeitungsstrahls enthaltenden Ebene ausgerichtet ist (s-Polarisation). Wie weiter oben beschrieben wurde, kann die Filterung einer linearen Polarisationskomponente für die bildgebende Erfassung der Leuchtstreifen erforderlich sein.

Bei einer vorteilhaften Variante umfasst das Verfahren zusätzlich: Beeinflussen mindestens einer Stellgröße des thermischen Schneidprozesses in Abhängigkeit von der ermittelten Messgröße. Durch die Anpassung bzw. die Regelung einer oder mehrerer Stellgrößen des Laserschneidprozesses kann eine gleichbleibende Qualität beim Laserschneiden sichergestellt werden.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1a: eine schematische Darstellung eines Ausführungsbeispiels einer Vorrichtung zur Überwachung und Regelung eines Laserschneidprozesses an einem Werkstück,
- Fig. 1b: eine Darstellung einer Blende zur Bildung eines Beobachtungsstrahls in einer solchen Vorrichtung entlang einer Schnittlinie B-B von Fig. 1a,
- Fig. 2a-c: eine dreidimensionale Darstellung einer Schnittfuge, eine Draufsicht auf eine Schnittfuge sowie ein Wärme-Bild eines zu überwachenden Bereichs des Werkstücks mit zwei Leuchtstreifen bei einem Qualitätsschnitt,
- Fig. 3a-c: Darstellungen analog zu Fig. 2a-c bei einem Trennschnitt mit geringer Schneidqualität, sowie
- Fig. 4: eine Darstellung eines Intensitätsprofils quer zur Vorschubrichtung entlang einer Bildzeile des Wärme-Bildes von Fig. 2c.

In der folgenden Beschreibung der Zeichnungen werden für gleiche bzw. funktionsgleiche Bauteile identische Bezugszeichen verwendet.

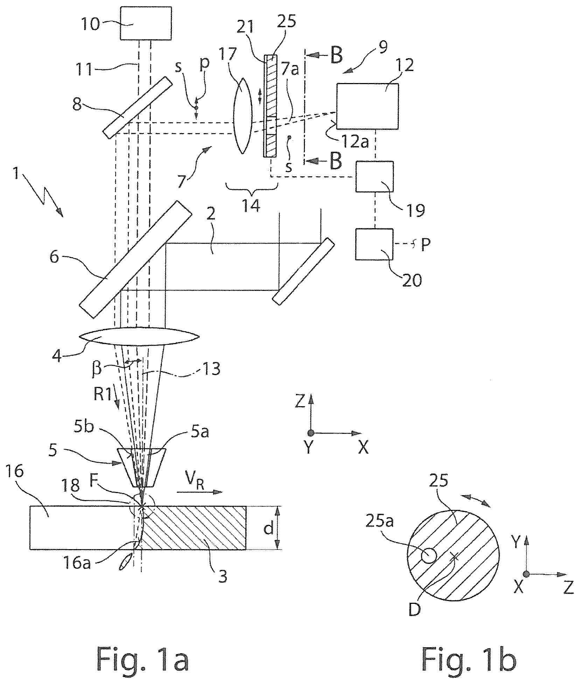

**Fig. 1a** zeigt einen beispielhaften Aufbau einer Vorrichtung 1 zur Überwachung und Regelung eines Laserschneidprozesses an einem Werkstück 3 mittels eines Bearbeitungsstrahls in Form eines Laserstrahls 2. Die Vorrichtung 1 ist im gezeigten Beispiel in Form eines Laserbearbeitungskopfs ausgebildet, der Teil einer nicht näher dargestellten Laserbearbeitungsmaschine ist. Der Laserstrahl 2 wird im gezeigten Beispiel von einem CO₂-Laser erzeugt. Alternativ kann der Laserstrahl 2 beispielsweise durch einen Festkörperlaser erzeugt werden. Der Laserstrahl 2 wird für die Durchführung einer schneidenden Bearbeitung an dem Werkstück 3 mittels einer Fokussiereinrichtung in Form einer Fokussierlinse 4 auf das Werkstück 3 fokussiert. Bei der Fokussierlinse 4 handelt es sich im gezeigten Beispiel um eine Linse aus Zinkselenid, die den Laserstrahl 2 durch eine Laserbearbeitungsdüse 5, genauer gesagt durch deren Düsenöffnung 5a, auf das Werkstück 3 fokussiert, und zwar im gezeigten Beispiel auf eine Fokusposition F an der Oberseite des Werkstücks 3. Der Laserstrahl 2 bildet dort einen Wechselwirkungsbereich 18 mit dem Werkstück 3, hinter dem entgegen einer Vorschubrichtung v bzw. Schnittrichtung des Laserschneidprozesses eine Schnittfuge 16 erzeugt wird. Im Falle eines Laserstrahls 2 aus einem Festkörperlaser kann eine Fokussierlinse bspw. aus Quarzglas eingesetzt werden.

In Fig. 1a ebenfalls zu erkennen ist ein teildurchlässig ausgebildeter Umlenkspiegel 6, welcher den einfallenden Laserstrahl 2 (bspw. mit einer Wellenlänge von ca. 10,6 µm) reflektiert und für eine Prozessüberwachung relevante Beobachtungsstrahlung zu einem weiteren teildurchlässigen Umlenkspiegel 8 transmittiert. Der Umlenkspiegel 6 ist im gezeigten Beispiel für Beobachtungsstrahlung in Form von Wärmestrahlung bei Wellenlängen λ von ca. 700 nm bis 2000 nm teildurchlässig ausgebildet. Der weitere teildurchlässige Umlenkspiegel 8 reflektiert die Beobachtungsstrahlung zu einer Bilderfassungseinrichtung 9. Eine Beleuchtungsquelle 10 dient zur koaxialen Beleuchtung des Werkstücks 3 mit Beleuchtungsstrahlung 11. Die Beleuchtungsstrahlung 11 wird von dem weiteren teiltransmissiven Umlenkspiegel 8 sowie von dem Umlenkspiegel 6 transmittiert und durch die Düsenöffnung 5a der Laserbearbeitungsdüse 5 hindurch auf das Werkstück 3 gelenkt.

Alternativ zu den teildurchlässigen Umlenkspiegeln 6, 8 können auch Scraperspiegel oder Lochspiegel, welche einfallende Strahlung nur aus einem Randbereich reflektieren, eingesetzt werden, um die Beobachtungsstrahlung 7 der Bilderfassungseinrichtung 9 zuzuführen bzw. um die Beleuchtungsstrahlung 11 dem Werkstück 3 zuzuführen. Auch mindestens ein seitlich in den Strahlengang des Laserstrahls 2 eingebrachter Spiegel kann verwendet werden, um die Beobachtung zu ermöglichen.

Als Beleuchtungsquelle 10 können Diodenlaser oder LEDs oder Blitzlampen vorgesehen werden, die wie in Fig. 1a gezeigt koaxial, aber auch off-axis zur Laserstrahlachse 13 angeordnet werden können. Die Beleuchtungsquelle 10 kann beispielsweise auch außerhalb (insbesondere neben) der Vorrichtung 1 angeordnet und auf das Werkstück 3 gerichtet sein; alternativ kann die Beleuchtungsquelle 10 innerhalb der Vorrichtung 1 angeordnet sein, jedoch nicht koaxial zum Laserstrahl 2 auf das Werkstück 3 ausgerichtet sein. Gegebenenfalls kann die Vorrichtung 1 auch ohne eine Beleuchtungsquelle 10 betrieben werden.

Teil der Bilderfassungseinrichtung 9 ist eine im Beobachtungsstrahlengang 7 hinter dem weiteren teildurchlässigen Umlenkspiegel 8 angeordnete geometrisch hochauflösende Kamera 12. Bei der Kamera 12 kann es sich um eine Hochgeschwindigkeitskamera handeln, die koaxial zur Laserstrahlachse 13 bzw. zur Verlängerung der Laserstrahlachse 13 und somit richtungsunabhängig angeordnet ist. Beim dargestellten Beispiel erfolgt die Aufnahme von Bildern durch die Kamera 12 im Auflichtverfahren im NIR/IR-Wellenlängenbereich, um das Prozesseigenleuchten bzw. ein Wärmebild des Schneidprozesses aufzunehmen. Bei dem in Fig. 1a gezeigten Beispiel kann ein Filter vor der Kamera 12 angeordnet werden, wenn weitere Strahlungs- bzw. Wellenlängenanteile von der Erfassung mit der Kamera 12 ausgeschlossen werden sollen. Der Filter kann z.B. als schmalbandiger Bandpassfilter mit einer Halbwertsbreite von beispielsweise ca. 15 nm ausgebildet sein, der Wellenlängen λ im Bereich um ca. 800 nm transmittiert.

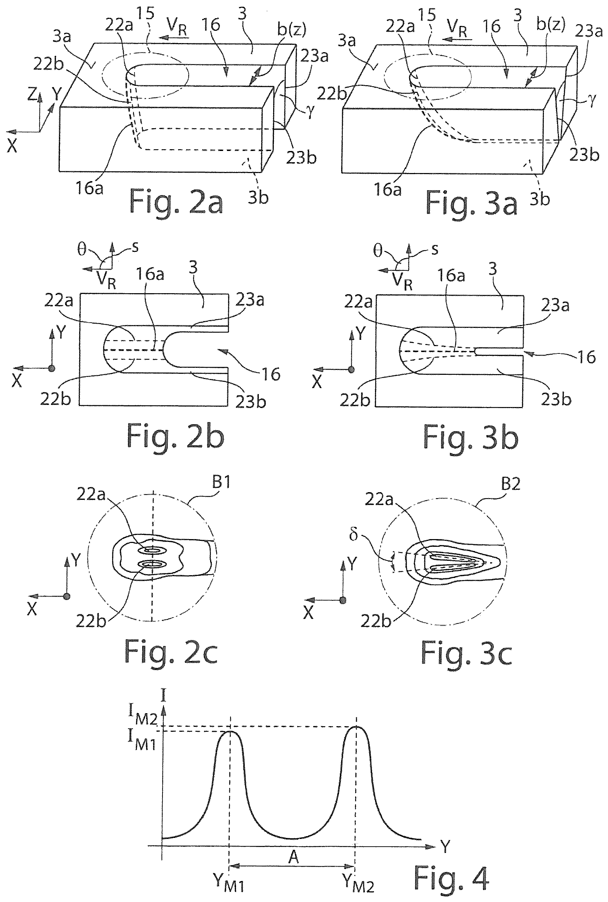

Zur Erzeugung von Bildern B1, B2 eines in **Fig. 2a, b** bzw. in **Fig. 3a, b** gezeigten zu überwachenden Bereichs 15 des Werkstücks 3, welcher der Schnittfuge 16 bzw. einen Abschnitt der Schnittfuge 16 mit der Schneidfront 16a enthält, auf einer Detektorfläche 12a der Kamera 12 weist die Bilderfassungseinrichtung 9 eine Abbildungsoptik 14 auf. Im gezeigten Beispiel weist die Abbildungsoptik 14 eine Blende 25 auf, die um eine zentrale Drehachse D drehbar gelagert ist, so dass sich bei der Drehung die Position einer exzentrisch angeordneten Blendenöffnung 25a auf einem Kreisbogen um die Drehachse D bewegt.

Durch die Anordnung der Blende 25 in dem mittels einer Linse 17 fokussierten Strahlengangs der Abbildungsoptik 14 tritt nur ein Teil des Beobachtungsstrahlengangs 7, welcher einen Randbereich der Fokussierlinse 4 durchläuft und im konvergenten Strahlengang nach der Fokussierlinse 4 unter einem Winkel β zur Strahlachse 13 des Laserstrahls 2 ausgerichtet ist, durch die exzentrisch zur Verlängerung der Strahlachse 13 des Laserstrahls 2 angeordnete Blendenöffnung 25a hindurch und bildet einen Beobachtungsstrahl 7a, welcher auf der Detektoroberfläche 12a abgebildet wird. Bei dem in Fig. 1a gezeigten Beispiel verläuft eine Beobachtungsrichtung R1 des Beobachtungsstrahls 7a in der Projektion in die XY-Ebene bzw. die Werkstückebene in Vorschubrichtung v_{R}, entlang derer der Laserstrahl 2 und das Werkstück 3 in der XY-Ebene relativ zueinander bewegt werden, um die gewünschte Schnittkontur zu bilden, d.h. es erfolgt eine stechende Beobachtung. Der Winkel β, unter dem die Beobachtungsrichtung R1 zur Strahlachse 13 des Laserstrahls 2 ausgerichtet ist, liegt im gezeigten Beispiel zwischen ca. 1° und ca. 5°, beispielsweise bei ca. 4°.

Wie in Fig. 1a zu erkennen ist, ist an der Blende 25 ein Polarisationsfilter 21 angebracht, der sich gemeinsam mit dem Blende 25 um die Drehachse D dreht. Der Polarisationsfilter 21 ist zur Filterung einer linearen Polarisationskomponente p ausgebildet, die im gezeigten Beispiel parallel zu einer Ebene (XZ-Ebene) ausgerichtet ist, welche die Vorschubrichtung v sowie die Z-Richtung bzw. die Strahlachse 13 des Laserstrahls 2 enthält. Wie in Fig. 1a zu erkennen ist, weist der Beobachtungsstrahl 7a nach dem Polarisationsfilter 21 nur noch eine senkrecht zur XZ-Ebene ausgerichtete Polarisationskomponente s auf. Die Filterung einer linearen Polarisationskomponente des Beobachtungsstrahls 7a hat sich für die Beobachtung der Schnittfuge 16 bzw. des zu überwachenden Bereichs 15 als günstig erwiesen. Es versteht sich, dass an Stelle der parallel zur XZ-Ebene ausgerichteten Polarisationskomponente p gegebenenfalls auch die senkrecht zur XZ-Ebene ausgerichtete Polarisationskomponente s oder eine anders ausgerichtete Polarisationskomponente mit Hilfe des Polarisationsfilters 21 gefiltert werden kann. Die Verwendung der s-polarisierten Polarisationskomponente hat sich für die Beobachtung der Schnittfuge 16 als besonders günstig erwiesen, da die in Fig. 2a, 2b und in Fig. 3a, 3b gezeigten gestrichelt dargestellten Linien, die im Wesentlichen den in Fig. 2c und in Fig. 3c gezeigten Leuchtstreifen 22a, 22b entsprechen, einen optimalen Winkel aufweisen, um viel s-polarisierte Strahlung zu emittieren.

An Stelle einer mechanisch verstellbaren Blende 25 kann auch eine elektrisch verstellbare Blende, beispielsweise in Form eines LCD-Arrays, verwendet werden, bei der einzelne Pixel oder Pixelgruppen elektronisch an- bzw. ausgeschaltet werden, um die Blendenwirkung zu erzeugen. Auch kann die mechanische Blende 25 anders als in Fig. 1a, 1b gezeigt quer zum Beobachtungsstrahlengang 7, beispielsweise in der YZ-Ebene, bewegt bzw. verschoben werden, um unterschiedliche Teile des Beobachtungsstrahlengangs 7 abzuschatten bzw. für die Beobachtung zu öffnen. Die Blende 25 kann auch in Form eines oder mehrerer auf- und zuklappbarer mechanischer Elemente realisiert werden. Entsprechend kann auch der Polarisationsfilter 21 als LCD-Polarisator ausgebildet sein, um die Ausrichtung der gefilterten Polarisationskomponente geeignet zu wählen, insbesondere um die Ausrichtung der gefilterten Polarisationskomponente zu drehen.

Wie in Fig. 2c und in Fig. 3c zu erkennen ist, wird ein jeweils von der Abbildungsoptik 14 aufgenommenes Bild des zu überwachenden Bereichs 15 des Werkstücks 3 von einer kreisförmigen Innenkontur 5b der Laserschneiddüse 5 begrenzt. Der durch die Innenkontur 5b der Laserschneiddüse 5 begrenzte zu überwachende Bereich 15 enthält ein Bild B1, B2 des Wechselwirkungsbereichs 18, das bei den in Fig. 2c und Fig. 3c gezeigten Darstellungen aus derselben Beobachtungsrichtung R1 aufgenommen wurde. Die Projektion der Beobachtungsrichtung R1 in die XY-Ebene ist in Fig. 2a durch einen Pfeil dargestellt. Wie weiter oben beschrieben wurde, verläuft die Beobachtungsrichtung R1 bei dem in Fig. 1a gezeigten Beispiel in bzw. entlang der Vorschubrichtung v_{R}, d.h. in positiver X-Richtung, was als stechende Beobachtung in Bezug auf eine Schneidfront 16a an dem Werkstück 3 bezeichnet wird, hinter der sich die Schnittfuge 16 ausbildet.

In den zwei aufgenommenen Bildern B1, B2 sind jeweils zwei Leuchtstreifen 22a, 22b zu erkennen, die im Wesentlichen entlang der X-Richtung bzw. der Vorschubrichtung v_{R} verlaufen, entlang der auch die Schnittflanken 23a, 23b der Schnittfuge 16 verlaufen, die in Fig. 2a und in Fig. 3a an einem Teilbereich bzw. Ausschnitt des Werkstücks 3 dargestellt sind, an dessen Oberseite 3a auch der kreisförmige Umriss des zu überwachenden Bereichs 15 zu erkennen ist. Jedes der beiden Bilder B1, B2 wurde mit einer unterschiedlichen Vorschubgeschwindigkeit v_{R} aufgenommen, wobei die Vorschubgeschwindigkeit v_{R} bei dem in Fig. 2c gezeigten Bild B1 kleiner und in dem in Fig. 3c gezeigten Bild B2 größer ist. Der Abstand A (vgl. Fig. 4) zwischen den Leuchtstreifen 22a, 22b in Y-Richtung, d.h. quer zur Vorschubrichtung v_{R}, nimmt mit zunehmender Vorschubgeschwindigkeit v_{R} ab, bis sich bei dem in Fig. 3c gezeigten Bilder B2 die beiden Leuchtstreifen 22a, 22b teilweise überlappen bzw. zu einem gemeinsamen Leuchtstreifen vereinigen. Die beiden sich vereinigenden Leuchtstreifen 22a, 22b schließen einen Winkel δ miteinander ein.

Es hat sich gezeigt, dass bei einem Schneidprozess, bei dem das in Fig. 2c gezeigte Bild B1 aufgenommen wird, die Schnittflanken 23a, 23b der Schnittfuge 16 in Dickenrichtung des Werkstücks 3 (d.h. in Z-Richtung) im Wesentlichen parallel zueinander, d.h. unter einem sehr kleinen Winkel γ verlaufen, so dass ein Qualitätsschnitt vorliegt (vgl. Fig. 2a, 2b). Bei dem in Fig. 3c gezeigten Bild B2, bei dem die beiden Leuchtstreifen 22a, 22b sich teilweise vereinigen, liegt hingegen ein Trennschnitt minderer Qualität vor, bei dem eine Gratbildung sowie die Bildung von Riefen entlang der Schnittflanken 23a, 23b einsetzt, die in diesem Fall nicht im Wesentlichen parallel, sondern in Dickenrichtung (Z-Richtung) unter einem deutlich größeren Winkel γ zueinander verlaufen, wie dies in Fig. 3a dargestellt ist. Bei dem in Fig. 3a, 3b gezeigten Schnittspalt 16 nimmt die Breite b(z) der Schnittfuge 16 in Z-Richtung von der Oberseite 3a zur Unterseite 3b des Werkstücks 3 kontinuierlich ab, so dass die Schnittfuge 16 bei der in Fig. 3b gezeigten Schnittdarstellung ein deutlich ausgeprägtes V-förmiges Profil aufweist. Die in Fig. 3a, 3b gezeigte, sich im Querschnitt nach unten stark verjüngende Schnittfuge 16 ist für den SchmelzSchneidprozess eher ungünstig, d.h. die Schnittfuge 16 sollte die in Fig. 2a, 2b gezeigte Geometrie mit den im Wesentlichen parallelen Schnittflanken 23a, 23b, d.h. mit einer über die Dicke d des Werkstücks 3 im Wesentlichen konstanten Spaltbreite b(z) aufweisen.

Um den Schneidprozess so zu regeln, dass stets ein Qualitätsschnitt vorliegt, können die in den in Fig. 2c und Fig. 3c gezeigten Leuchtstreifen 22a, 22b im Wärmebild verwendet werden, die im Wesentlichen eine Draufsicht auf die Fig. 2a, 2b und in Fig. 3a, 3b gezeigten Linien darstellen, entlang derer die polarisationsabhängigen Prozessemissionen bei der Detektion von s-polarisierter Strahlung besonders stark sind. Bei der in Fig. 2a, 2b gezeigten Schnittfuge 16 verlaufen die beiden Linien, entlang derer starke Prozessemissionen auftreten und welche den Leuchtstreifen 22a, 22b entsprechen, im Wesentlichen parallel zueinander, so dass ein Abstand A (vgl. Fig. 4) zwischen den beiden Leuchtstreifen 22a, 22b bestimmt werden kann. Bei dem in Fig. 3a, 3b gezeigten Beispiel verlaufen die Linien mit starken polarisationsabhängigen Prozessemissionen, welche den Leuchtstreifen 22a, 22b entsprechen, an den schrägen Schnittflanken 23a, 23b der Schnittfuge 16 entlang, so dass der Abstand A zwischen den beobachteten Leuchtstreifen 22a, 22b in negativer X-Richtung abnimmt. Bei dem in Fig. 3a-c gezeigten Trennschnitt mit geringer Qualität laufen die beiden Leuchtstreifen 22a, 22b hinter der Schnittfront 16a zusammen, so dass die beiden Leuchtstreifen 22a, 22b sich überlappen und eine in der Draufsicht auf die Oberseite 3a des Werkstücks 3 V-förmige Ausrichtung zueinander einnehmen, wie dies in Fig. 3c zu erkennen ist.

Als Messgröße(n) für die Schneidqualität des Schneidprozesses kann/können daher der Abstand A zwischen den beiden Leuchtstreifen 22a, 22b in Y-Richtung, d.h. quer zur Vorschubrichtung v, sowie der Winkel δ zwischen den beiden Leuchtstreifen 22a, 22b dienen.

Der Abstand A zwischen den beiden Leuchtstreifen 22a, 22b kann beispielsweise in dem in Fig. 2c gezeigten Bild B1 auf die nachfolgend in Zusammenhang mit Fig. 4 beschriebene Weise ermittelt werden, wozu eine in Fig. 1a gezeigte Auswerteeinrichtung 19 der Vorrichtung 1 dient. Wie in Fig. 2c angedeutet ist, wird entlang einer sich in Y-Richtung erstreckenden Bild- bzw. Pixelzeile die auf die Detektorfläche 12a auftreffende Strahlungsintensität I gemessen, welche im Wesentlichen auf die Wärmestrahlung des Werkstücks 3 zurückzuführen ist. Wie in Fig. 4 zu erkennen ist, weist die Strahlungsintensität I zwei Intensitätsmaxima I_{M1}, I_{M2} auf, denen jeweils eine Position Y_{M1}, Y_{M2} in Y-Richtung zugeordnet ist. Die Differenz Y_{M2} - Y_{M1} zwischen den beiden Positionen Y_{M1}, Y_{M2} entspricht dem Abstand A zwischen den beiden Leuchtstreifen 22a, 22b. An Stelle der Auswertung der Strahlungsintensität I entlang einer sich in Y-Richtung erstreckenden Bildzeile können auch die Intensitätswerte mehrerer Bildzeilen verwendet werden, wenn diese in geeigneter Weise gemittelt werden (z.B. Mittelwert oder Median). Für das Auffinden der beiden Intensitätsmaxima I_{M1}, I_{M2} können geeignete Verfahren aus der Bildverarbeitung verwendet werden.

Bei dem in Fig. 3c gezeigten Bild B2 kann eine Bildauswertung erfolgen, indem der Winkel δ zwischen den beiden sich vereinigenden Leuchtstreifen 22a, 22b ermittelt wird und der Winkel δ als Messgröße für die Schneidqualität verwendet wird. Hierbei können ähnlich wie dies in Fig. 4 dargestellt ist anhand der Strahlungsintensität I in dem aufgenommenen Bild B2 zunächst die im Wesentlichen ovalen bzw. ellipsenförmigen Außenkonturen der beiden Leuchtstreifen 22a, 22b bestimmt werden, beispielsweise indem die Kontur bzw. Geometrie betrachtet wird, die einem vorgegebenen Intensitätswert der gemessenen Strahlungsintensität I in dem aufgenommenen Bild B2 entspricht. Sind die Außenkonturen der beiden Leuchtstreifen 22a, 22b bekannt, können deren Längsachsen bestimmt werden. Der Winkel δ wird dann zwischen den beiden Längsachsen der Leuchtstreifen 22a, 22b gemessen. Für die Winkelmessung können alternativ oder zusätzlich Auswertealgorithmen verwendet werden, wie sie in der Literatur beschrieben sind (z.B. Hough Transformation).

Bei dem in Fig. 2c gezeigten Bild B1 ist die Bestimmung des Winkels δ zwischen den Leuchtstreifen 22a, 22b ggf. problematisch, da diese nahezu parallel verlaufen, während bei dem in Fig. 3c gezeigten Bild B2 die Bestimmung des Abstands A zwischen den beiden zusammenlaufenden Leuchtstreifen 22a, 22b ggf. problematisch ist. Es versteht sich aber, dass bei einer Schneidgeschwindigkeit, die zwischen den beiden in Fig. 2a-c bzw. Fig. 3a-c gezeigten Extremen liegt, auf die in Fig. 4 gezeigte Weise einerseits anhand der beiden Intensitätsmaxima I_{M1}, I_{M2} der Abstand A zwischen den beiden Leuchtstreifen 22a, 22b und andererseits der Winkel δ zwischen den beiden Leuchtstreifen 22a, 22b ermittelt werden kann, um die Schneidqualität anhand beider Messgrößen A, δ beurteilen zu können.

Alternativ kann in der Auswerteeinrichtung 19 eine Bildauswertung erfolgen, bei der Bilder von Qualitätsschnitten und Trennschnitten (d.h. Schnitten mit minderer Schnittqualität), in denen jeweils die Leuchtstreifen 22a, 22b zu sehen sind, geclustert werden und das aktuell erzeugte bzw. aufgenommene Bild kann über vergleichende Bildauswertung diesen Clustern zugeordnet werden. Auch hierfür können aus der Bildbearbeitung bekannte Algorithmen verwendet werden, z.B. der Haaralgorithmus. Die Zuordnung zu einem Cluster stellt ebenfalls eine - allerdings in der Regel keine analoge bzw. kontinuierlich veränderliche - Messgröße für die Schneidqualität des Schneidprozesses dar.

In Abhängigkeit von der mindestens einen auf die weiter oben beschriebene Weise ermittelten Messgröße A, δ kann eine in Fig. 1a gezeigte Regeleinrichtung 20 mindestens eine Stellgröße, beispielsweise die Vorschubgeschwindigkeit, die Leistung P des in Fig. 1a nicht bildlich dargestellten Lasers, die Fokusposition F, die den Gasdruck eines bei dem Schneidprozess verwendeten Hilfsgases etc. beeinflussen bzw. verändern, und zwar derart, dass die Messgröße A, δ einen vorgegebenen Wert aufweist oder ein vorgegebenes Werteintervall nicht verlässt. Durch eine solche Regelung kann sichergestellt werden, dass bei dem (Schmelz-)Schneidprozess eine konstant hohe Schnittqualität erreicht wird, sodass Schlechtschnitte und insbesondere Schnittabrisse idealer Weise vollständig vermieden werden können.

Insbesondere kann die Vorschubgeschwindigkeit oder die Laserleistung P so eingestellt werden, dass diese stets knapp unterhalb der maximal zulässigen Vorschubgeschwindigkeit bzw. Laserleistung liegt, bei der noch ein Qualitätsschnitt möglich ist, d.h. die Vorschubreserve bzw. die Leistungsreserve kann nahezu vollständig ausgeschöpft werden. Für die Anpassung bzw. die Beeinflussung der Vorschubgeschwindigkeit kann die Regeleinrichtung 20 beispielsweise auf nicht näher gezeigte Bewegungseinrichtungen zur Bewegung des Werkstücks 3 und/oder des Laserschneidkopfs 1 einwirken.

Um die Messgröße für die Schnittqualität, beispielsweise den Abstand A oder den Winkel δ, auch bei einer Änderung der Vorschubrichtung v_{R} während des Schneidens entlang von gekrümmten Schnittkonturen unter einer gewünschten Beobachtungsrichtung, insbesondere der Beobachtungsrichtung R1 in Vorschubrichtung v_{R}, beobachten zu können, ist es erforderlich, die Ausrichtung der Beobachtungsrichtung R1 in der XY-Ebene in Abhängigkeit von der Vorschubrichtung v_{R} bzw. von der Orientierung der Vorschubrichtung v_{R} in der XY-Ebene zu verändern. Zu diesem Zweck kann die Auswerteeinrichtung 19 (ggf. auch die Regeleinrichtung 20) dienen, welche die Blende 25 und damit die Blendenöffnung 25a bei der Änderung der Vorschubrichtung v_{R} entsprechend um die Drehachse D mitdreht, so dass die Beobachtungsrichtung R1 stets in Vorschubrichtung v_{R} ausgerichtet bleibt. Durch das Mitdrehen der Blende 25 kann auch die Ausrichtung der linearen Polarisationskomponente (typischerweise s-Polarisation), die von dem sich ebenfalls mitdrehenden Polarisationsfilter 21 ausgefiltert wird, relativ zur Vorschubrichtung v_{R} konstant gehalten werden. Es versteht sich, dass zu diesem Zweck bzw. zur Erzeugung eines Beobachtungsstrahls 7a, der unter einem Winkel β zur Strahlachse 13 ausgerichtet ist, nicht zwingend eine Blende 25 erforderlich ist, vielmehr kann die Bilderfassungseinrichtung 9 zu diesem Zweck auf andere Weise ausgebildet sein, beispielsweise wie dies in der WO 2015/036140 A1 beschrieben ist.

## Patentansprüche

1. Vorrichtung (1) zur Überwachung, insbesondere zur Regelung, eines thermischen Schneidprozesses an einem Werkstück (3), umfassend:
eine Fokussiereinrichtung (4) zur Fokussierung eines Bearbeitungsstrahls, insbesondere eines Laserstrahls (2), auf das Werkstück (3) zur Ausbildung einer Schnittfuge (16) an dem Werkstück (3), sowie
eine Bilderfassungseinrichtung (9), die zur Erzeugung mindestens eines Bildes (B1, B2 ) eines zu überwachenden Bereichs (15) des Werkstücks (3) einen Detektor (12) aufweist, **gekennzeichnet durch**
eine Auswerteeinrichtung (19), die ausgebildet ist, anhand des mindestens einen Bildes (B1, B2) mindestens eine Messgröße (A, δ) für den Verlauf der Spaltbreite (b(Z)) der Schnittfuge (16) in Dickenrichtung (Z) des Werkstücks (3), insbesondere für einen Winkel (γ) zwischen den beiden Schnittflanken (23a, 23b) der Schnittfuge (16), zu bestimmen, und die Auswerteeinrichtung (19) ausgebildet ist, die Messgröße (A, δ) anhand von zwei entlang der Schnittflanken (23a,b) der Schnittfuge (16) verlaufenden Leuchtstreifen (22a,b) in dem mindestens einen Bild (B1, B2) zu ermitteln, wobei die Bilderfassungseinrichtung (9) zur Bildung eines Beobachtungsstrahls (7a) zur Beobachtung des zu überwachenden Bereichs (15) aus einer unter einem Winkel (β) zur Strahlachse (13) des Bearbeitungsstrahls verlaufenden Beobachtungsrichtung (R1) ausgebildet ist, und die Bilderfassungseinrichtung (9) eine Abbildungsoptik (14) zur Erzeugung des Bildes (B1) des zu überwachenden Bereichs (15) aus der unter dem Winkel (β) zur Strahlachse (13) des Bearbeitungsstrahls verlaufenden Beobachtungsrichtung (R1) umfasst, wobei die Bilderfassungseinrichtung (9) einen Polarisator (21) aufweist, der ausgebildet ist, eine erste lineare Polarisationskomponente (s) des Beobachtungsstrahls (7a) zur Beobachtung des zu überwachenden Bereichs (15) zu dem Detektor (12) zu transmittieren und eine zweite, zur ersten senkrechte Polarisationskomponente (p) des Beobachtungsstrahls (7a) zu filtern.

2. Vorrichtung nach Anspruch 1, wobei als Messgröße ein Abstand (A) und/oder ein Winkel (δ) zwischen den beiden Leuchtstreifen (22a, 22b) ermittelt wird.

3. Vorrichtung nach Anspruch 2, bei welcher die Auswerteeinrichtung (19) ausgebildet ist, den Abstand (A) zwischen den Leuchtstreifen (22a, 22b) anhand der Positionen (Y_{M1}, Y_{M2}) von zwei Intensitätsmaxima (I_{M1}, I_{M2}) des Bildes (B1, B2) quer zu einer Vorschubrichtung (v_{R}) des thermischen Schneidprozesses zu bestimmen.

4. Vorrichtung nach einem der vorhergehenden Ansprüche, wobei der Beobachtungsstrahl (7a) die Fokussiereinrichtung (4) durchläuft.

5. Vorrichtung nach Anspruch 4, bei welcher der Winkel (β) der Beobachtungsrichtung (R1) zur Strahlachse (13) des Bearbeitungsstrahls zwischen 1° und 5° liegt.

6. Vorrichtung nach einem der Ansprüche 4 oder 5, bei welcher die Bilderfassungseinrichtung (9) ausgebildet ist, die Ausrichtung der Beobachtungsrichtung (R1) des Beobachtungsstrahls (7a) und/oder die Richtung der ersten, transmittierten linearen Polarisationskomponente (s) des Beobachtungsstrahls (7a) in einer Ebene (X, Y) senkrecht zur Strahlachse (13) des Bearbeitungsstrahls in Abhängigkeit von einer Vorschubrichtung (v_{R}) des thermischen Schneidprozesses zu verändern, insbesondere relativ zur Vorschubrichtung (v_{R}) konstant zu halten.

7. Vorrichtung nach Anspruch 6, bei welcher die Beobachtungsrichtung (R1) in einer Projektion in eine Ebene (X, Y) senkrecht zur Strahlachse (13) des Bearbeitungsstrahls (2) in Vorschubrichtung (v_{R}) verläuft.

8. Vorrichtung nach Anspruch 6 oder 7, bei welcher die Richtung der ersten, transmittierten linearen Polarisationskomponente (s) des Beobachtungsstrahls (7a) in einer Ebene (X, Y) senkrecht zur Strahlachse (13) des Bearbeitungsstrahls (2) unter einem Winkel (θ) zwischen 55° und 125°, bevorzugt zwischen 80° und 100°, zur Vorschubrichtung (v_{R}) verläuft.

9. Vorrichtung nach einem der vorhergehenden Ansprüche, bei welcher der Detektor (12) der Bilderfassungseinrichtung (9) zur Erzeugung des mindestens einen Bildes (B1 bis B4) des zu überwachenden Bereichs (15) des Werkstücks (3) bei Wellenlängen zwischen 700 nm und 2 µm ausgebildet ist.

10. Vorrichtung nach einem der vorhergehenden Ansprüche, weiter umfassend:
eine Steuer- und/oder Regeleinrichtung (20) zur Beeinflussung mindestens einer Stellgröße (F, P) des thermischen Schneidprozesses in Abhängigkeit von der mindestens einen ermittelten Messgröße (A, δ) für den Verlauf der Spaltbreite (b(Z)) der Schnittfuge (16) in Dickenrichtung (Z) des Werkstücks (3).

11. Verfahren zum Überwachen, insbesondere zum Regeln, eines thermischen Schneidprozesses an einem Werkstück (3), umfassend:
Erzeugen mindestens eines Bildes (B1, B2) eines zu überwachenden Bereichs (15) des Werkstücks (3), der die Schnittflanken (23a, 23b) einer bei dem Schneidprozess an dem Werkstück (3) gebildeten Schnittfuge (16) enthält,
**gekennzeichnet durch**
Ermitteln mindestens einer Messgröße (A, δ) für den Verlauf der Spaltbreite (b(Z)) der Schnittfuge (16) in Dickenrichtung (Z) des Werkstücks (3), insbesondere für einen Winkel (γ) zwischen den beiden Schnittflanken (23a, 23b) der Schnittfuge (16), anhand des mindestens einen Bildes (B1, B2).

12. Verfahren nach Anspruch 11, bei dem eine erste lineare Polarisationskomponente (s) eines Beobachtungsstrahls (7a) zur Beobachtung des zu überwachenden Bereichs (15) für das Erzeugen des mindestens einen Bildes (B1 bis B4) zu einem Detektor (12) transmittiert wird und eine zweite, zur ersten senkrechte Polarisationskomponente (p) des Beobachtungsstrahls (7a) gefiltert wird, und wobei die Messgröße (A, δ) anhand von zwei entlang der Schnittflanken (23a, 23b) der Schnittfuge (16) verlaufenden Leuchtstreifen (22a, 22b) in dem mindestens einen Bild (B1, B2) ermittelt wird, wobei die Messgröße bevorzugt einen Abstand (A) oder einen Winkel (δ) zwischen den beiden Leuchtstreifen (22a, 22b) bildet.

13. Verfahren nach einem der Ansprüche 11 oder 12, bei dem die Ausrichtung einer Beobachtungsrichtung (R1) eines Beobachtungsstrahls (7a) zur Beobachtung des zu überwachenden Bereichs (15) und/oder die Richtung der ersten, transmittierten linearen Polarisationskomponente (p) des Beobachtungsstrahls (7a) in einer Ebene (X, Y) senkrecht zur Strahlachse (13) des Bearbeitungsstrahls in Abhängigkeit von einer Vorschubrichtung (v_{R}) des thermischen Schneidprozesses verändert wird, insbesondere relativ zur Vorschubrichtung (v_{R}) konstant gehalten wird.

14. Verfahren nach Anspruch 13, bei dem die Beobachtungsrichtung (R1) in einer Projektion in eine Ebene (X, Y) senkrecht zur Strahlachse (13) des Bearbeitungsstrahls (2) in Vorschubrichtung (v_{R}) ausgerichtet wird.

15. Verfahren nach Anspruch 13 oder 14, bei dem die Richtung der ersten, transmittierten linearen Polarisationskomponente (s) des Beobachtungsstrahls (7a) in einer Ebene (X, Y) senkrecht zur Strahlachse (13) des Bearbeitungsstrahls (2) unter einem Winkel (θ) zwischen 55° und 125°, bevorzugt zwischen 80° und 100°, zur Vorschubrichtung (v_{R}) verläuft.

16. Verfahren nach einem der Ansprüche 11 bis 15, weiter umfassend:
Beeinflussen mindestens einer Stellgröße (F, P) des thermischen Schneidprozesses in Abhängigkeit von der ermittelten Messgröße (A, δ).

## Claims

1. A device (1) for monitoring, in particular for feedback-controlling, a thermal cutting process carried out on a workpiece (3), the device comprising:
a focusing unit (4) for focusing a machining beam, in particular a laser beam (2), onto the workpiece (3) to form a kerf (16) on the workpiece (3), as well as
an image acquisition unit (9) which has a detector (12) for generating at least one image (B1, B2) of a region (15) to be monitored of the workpiece (3),
**characterized by**
an evaluation unit (19) designed to determine, based on the at least one image (B1, B2), at least one measured variable (A, δ) for the profile of the gap width (b(Z)) of the kerf (16) in the thickness direction (Z) of the workpiece (3), in particular for an angle (γ) between the two cut flanks (23a, 23b) of the kerf (16), and the evaluation unit (19) is designed to ascertain, in the at least one image (B1, B2), the measured variable (A, δ) based on two light stripes (22a,b) extending along the cut flanks (23a,b) of the kerf (16), wherein the image acquisition unit (9) is designed to form an observation beam (7a) for observing, from an observation direction (R1) which extends at an angle (β) relative to the beam axis (13) of the machining beam, the region (15) to be monitored, and wherein the image acquisition unit (9) comprises an image optic (14) for generating, from the observation direction (R1) which extends at the angle (β) relative to the beam axis (13) of the machining beam, the image (B1) of the region (15) to be monitored, wherein the image acquisition unit (9) has a polarizer (21) designed to transmit to the detector (12) a first linear polarization component (s) of the observation beam (7a) for observing the region (15) to be monitored, and to filter a second polarization component (p) of the observation beam (7a), the second polarization component being perpendicular to the first.

2. The device according to claim 1, wherein a distance (A) and/or an angle (δ) between the two light stripes (22a, 22b) is ascertained as a measured variable.

3. The device according to claim 2, in which the evaluation unit (19) is designed to determine the distance (A) between the light stripes (22a, 22b) based on the positions (Y_{M1}, Y_{M2}) of two intensity maxima (I_{M1}, I_{M2}) of the image (B1, B2) transverse to a feed direction (v_{R}) of the thermal cutting process.

4. The device according to one of the preceding claims, wherein the observation beam (7a) passes through the focusing unit (4).

5. The device according to claim 4, in which the angle (β) of the observation direction (R1) relative to the beam axis (13) of the machining beam lies between 1° and 5°.

6. The device according to one of claims 4 or 5, in which the image acquisition unit (9) is designed to vary, as a function of a feed direction (v_{R}) of the thermal cutting process, the orientation of the observation direction (R1) of the observation beam (7a) and/or the direction of the first transmitted linear polarization component (s) of the observation beam (7a) in a plane (X, Y) perpendicular to the beam axis (13) of the machining beam, in particular to keep said orientation and/or direction constant relative to the feed direction (v_{R}).

7. The device according to claim 6, in which the observation direction (R1), in a projection into a plane (X, Y) perpendicular to the beam axis (13) of the machining beam (2), extends in the feed direction (v_{R}).

8. The device according to claim 6 or 7, in which the direction of the first transmitted linear polarization component (s) of the observation beam (7a) extends, in a plane (X, Y) perpendicular to the beam axis (13) of the machining beam (2), at an angle (θ) of between 55° and 125°, preferably between 80° and 100°, relative to the feed direction (v_{R}).

9. The device according to one of the preceding claims, in which the detector (12) of the image acquisition unit (9) is designed to generate the at least one image (B1 to B4) of the region (15) to be monitored of the workpiece (3) at wavelengths of between 700 nm and 2 µm.

10. The device according to one of the preceding claims, further comprising:
an open-loop and/or a closed-loop control unit (20) for influencing at least one control variable (F, P) of the thermal cutting process as a function of the at least one ascertained measured variable (A, δ) for the profile of the gap width (b(Z)) of the kerf (16) in the thickness direction (Z) of the workpiece (3).

11. A method for monitoring, in particular for closed-loop controlling, a thermal cutting process on a workpiece (3), comprising:
generating at least one image (B1, B2) of a region (15) to be monitored of the workpiece (3), the region containing the cut flanks (23a, 23b) of a kerf (16) formed on the workpiece (3) during the cutting process, **characterized by** ascertaining at least one measured variable (A, δ) for the profile of the gap width (b(Z)) of the kerf (16) in the thickness direction (Z) of the workpiece (3), in particular for an angle (γ) between the two cut flanks (23a, 23b) of the kerf (16), based on the at least one image (B1, B2).

12. The method according to claim 11, in which a first linear polarization component (s) of an observation beam (7a) for observing the region (15) to be monitored is transmitted to a detector (12) for generating the at least one image (B1 to B4), and a second polarization component (p) of the observation beam (7a) which is perpendicular to the first is filtered, and wherein the measured variable (A, δ) is ascertained in the at least one image (B1, B2) based on two light stripes (22a, 22b) extending along the cut flanks (23a, 23b) of the kerf (16), wherein the measured variable preferably forms a distance (A) or an angle (δ) between the two light stripes (22a, 22b).

13. The method according to one of claims 11 or 12, in which the orientation of an observation direction (R1) of an observation beam (7a) for observing the region (15) to be monitored, and/or the direction of the first transmitted linear polarization component (p) of the observation beam (7a) in a plane (X, Y) perpendicular to the beam axis (13) of the machining beam, is varied as a function of a feed direction (v_{R}) of the thermal cutting process, in particular is kept constant relative to the feed direction (v_{R}).

14. The method according to claim 13, in which the observation direction (R1), in a projection into a plane (X, Y) perpendicular to the beam axis (13) of the machining beam (2), is oriented in the feed direction (v_{R}).

15. The method according to claim 13 or 14, in which the direction of the first transmitted linear polarization component (s) of the observation beam (7a) extends at an angle (θ) between 55° and 125°, preferably between 80° and 100°, relative to the feed direction (v_{R}) in a plane (X, Y) perpendicular to the beam axis (13) of the machining beam (2).

16. The method according to one of claims 11 to 15, further comprising:
influencing at least one control variable (F, P) of the thermal cutting process as a function of the ascertained measured variable (A, δ).

## Revendications

1. Dispositif (1) destiné à la surveillance, en particulier à la régulation, d'un procédé de découpe thermique sur une pièce (3), comprenant :
une unité de focalisation (4) destiné à la focalisation d'un faisceau d'usinage, en particulier un faisceau laser (2), sur la pièce (3) pour la configuration d'une fente de coupe (16) sur la pièce (3), ainsi
qu'une unité de capture d'images (9), qui présente un détecteur (12) destiné à la génération d'au moins une image (B1, B2) d'une zone (15) à surveiller de la pièce (3),
**caractérisé par**
une unité d'évaluation (19), conçue pour déterminer, sur la base de ladite au moins une image (B1, B2), au moins une grandeur mesurée (A, δ) relative à l'évolution de la largeur de jeu (b(Z)) de la fente de coupe (16) dans la direction d'épaisseur (Z) de la pièce (3), en particulier un angle (γ) entre les deux flancs de coupe (23a, 23b) de la fente de coupe (16), et l'unité d'évaluation (19) étant conçue pour établir la grandeur mesurée (A, δ) sur la base de deux bandes lumineuses (22a,b) s'étendant le long des flancs de coupe (23a,b) de la fente de coupe (16) dans ladite au moins une image (B1, B2), dans lequel l'unité de capture d'images (9) est conçue pour la formation d'un faisceau d'observation (7a) permettant l'observation de la zone (15) à surveiller selon une direction d'observation (R1) s'étendant sous un angle (β) par rapport à l'axe de faisceau (13) du faisceau d'usinage, et l'unité de capture d'images (9) comprend une optique d'imagerie (14) destinée à la génération de l'image (B1) de la zone (15) à surveiller depuis la direction d'observation (R1) s'étendant sous l'angle (β) par rapport à l'axe de faisceau (13) du faisceau d'usinage, dans lequel l'unité de capture d'images (9) présente un polariseur (21) conçu pour transmettre une première composante de polarisation (s) linéaire du faisceau d'observation (7a), destinée à l'observation de la zone (15) à surveiller, vers le détecteur (12), et pour filtrer une deuxième composante de polarisation (p) du faisceau d'observation (7a), perpendiculaire à la première.

2. Dispositif selon la revendication 1, dans lequel, en tant que grandeur mesurée, un écart (A) et/ou un angle (δ) entre les deux bandes lumineuses (22a, 22b) est établi.

3. Dispositif selon la revendication 2, dans lequel l'unité d'évaluation (19) est conçue pour déterminer l'écart (A) entre les bandes lumineuses (22a, 22b) sur la base des positions (Y_{M1}, Y_{M2}) de deux maximums d'intensité (I_{M1}, I_{M2}) de l'image (B1, B2), transversalement à une direction d'avance (v_{R}) du procédé de découpe thermique.

4. Dispositif selon l'une des revendications précédentes, dans lequel le faisceau d'observation (7a) traverse l'unité de focalisation (4).

5. Dispositif selon la revendication 4, dans lequel l'angle (β) de la direction d'observation (R1) par rapport à l'axe de faisceau (13) du faisceau d'usinage est compris entre 1° et 5°.

6. Dispositif selon l'une des revendications 4 ou 5, dans lequel l'unité de capture d'images (9) est conçu pour modifier l'orientation de la direction d'observation (R1) du faisceau d'observation (7a) et/ou la direction de la première composante de polarisation (s) linéaire transmise du faisceau d'observation (7a) dans un plan (X, Y) perpendiculaire à l'axe de faisceau (13) du faisceau d'usinage en fonction d'une direction d'avance (v_{R}) du procédé de découpe thermique, en particulier pour la maintenir constante relativement à la direction d'avance (v_{R}).

7. Dispositif selon la revendication 6, dans lequel la direction d'observation (R1) s'étend, dans une projection dans un plan (X, Y) perpendiculaire à l'axe de faisceau (13) du faisceau d'usinage (2), dans la direction d'avance (v_{R}).

8. Dispositif selon la revendication 6 ou 7, dans lequel la direction de la première composante de polarisation (s) linéaire transmise du faisceau d'observation (7a) s'étend dans un plan (X, Y) perpendiculaire à l'axe de faisceau (13) du faisceau d'usinage (2) sous un angle (θ) compris entre 55° et 125°, de préférence entre 80° et 100°, par rapport à la direction d'avance (v_{R}).

9. Dispositif selon l'une des revendications précédentes, dans lequel le détecteur (12) de l'unité de capture d'images (9) est conçu pour la génération de ladite au moins une image (B1 à B4) de la zone (15) à surveiller de la pièce (3) à des longueurs d'onde comprises entre 700 nm et 2 µm.

10. Dispositif selon l'une des revendications précédentes, comprenant en outre :
une unité de commande et/ou de régulation (20) destinée à l'influence d'au moins une variable de réglage (F, P) du procédé de découpe thermique en fonction de ladite au moins une grandeur mesurée (A, δ) établie pour l'évolution de la largeur de jeu (b(Z)) de la fente de coupe (16) dans la direction d'épaisseur (Z) de la pièce (3).

11. Procédé destiné à la surveillance, en particulier à la régulation, d'un procédé de découpe thermique sur une pièce (3), comprenant :
la génération d'au moins une image (B1, B2) d'une zone (15) à surveiller de la pièce (3), qui contient les flancs de coupe (23a, 23b) d'une fente de coupe (16) formée sur la pièce (3) lors du procédé de découpe,
**caractérisé par**
l'établissement d'au moins une grandeur mesurée (A, δ) relative à l'évolution de la largeur de jeu (b(Z)) de la fente de coupe (16) dans la direction d'épaisseur (Z) de la pièce (3), en particulier un angle (γ) entre les deux flancs de coupe (23a, 23b) de la fente de coupe (16), sur la base de ladite au moins une image (B1, B2).

12. Procédé selon la revendication 11, au cours duquel une première composante de polarisation (s) linéaire d'un faisceau d'observation (7a) destiné à l'observation de la zone (15) à surveiller est transmise vers un détecteur (12) pour la génération d'au moins une image (B1 à B4), et une deuxième composante de polarisation (p) du faisceau d'observation (7a), perpendiculaire à la première, est filtrée, et dans lequel la grandeur mesurée (A, δ) est établie sur la base de deux bandes lumineuses (22a, 22b) s'étendant le long des flancs de coupe (23a, 23b) de la fente de coupe (16) dans ladite au moins une image (B1, B2), dans lequel la grandeur mesurée constitue de préférence un écart (A) ou un angle (δ) entre les deux bandes lumineuses (22a, 22b).

13. Procédé selon l'une des revendications 11 ou 12, au cours duquel l'orientation d'une direction d'observation (R1) d'un faisceau d'observation (7a) destiné à l'observation de la zone (15) à surveiller et/ou la direction de la première composante de polarisation (p) linéaire transmise du faisceau d'observation (7a) est modifiée dans un plan (X, Y) perpendiculaire à l'axe de faisceau (13) du faisceau d'usinage en fonction d'une direction d'avance (v_{R}) du procédé de découpe thermique, en particulier maintenue constante relativement à la direction d'avance (v_{R}).

14. Procédé selon la revendication 13, au cours duquel la direction d'observation (R1) est orientée, dans une projection dans un plan (X, Y) perpendiculaire à l'axe de faisceau (13) du faisceau d'usinage (2), dans la direction d'avance (v_{R}).

15. Procédé selon la revendication 13 ou 14, au cours duquel la direction de la première composante de polarisation (s) linéaire transmise du faisceau d'observation (7a) s'étend dans un plan (X, Y) perpendiculaire à l'axe de faisceau (13) du faisceau d'usinage (2) sous un angle (θ) compris entre 55° et 125°, de préférence entre 80° et 100°, par rapport à la direction d'avance (v_{R}).

16. Procédé selon l'une des revendications 11 à 15, comprenant en outre :
l'influence d'au moins une variable de réglage (F, P) du procédé de découpe thermique en fonction de la grandeur mesurée (A, δ) établie.
